# EUROPÄISCHE PATENTSCHRIFT

(11) **EP 0 699 872 B1**
(45) Veröffentlichungstag und Bekanntmachung des Hinweises auf die Patenterteilung: **21.02.2001**
(21) Anmeldenummer: 95108496.1
(22) Anmeldetag: 02.06.1995
(51) Int. Cl.: F24D 12/02, F28F 21/02

(54) **Heizkessel zur Brennwertnutzung und ein Verfahren zum Betreiben dieses Heizkessels**
Condensing boiler and method for operating such a boiler
Chaudière à condensation et procédé d'opération d'une telle chaudière

(30) Priorität: 30.08.1994 DE 4430726
(43) Veröffentlichungstag der Anmeldung: 06.03.1996
(73) Patentinhaber: Omnical GmbH, 35716 Dietzhölztal (DE)
(72) Erfinder: Höfeld, Günter, D-35716 Dietzhölztal (DE); Schäfer, Christof, D-35041 Marburg (DE); Wessel, Ralf, Dr., D-57074 Siegen (DE)
(74) Vertreter: Radünz, Ingo, Dipl.-Ing.

(56) Entgegenhaltungen:
- EP-A- 0 011 104
- EP-A- 0 368 599
- DE-U- 9 014 143
- DE-U- 9 104 689
- US-A- 5 036 903

## Beschreibung

Die Erfindung bezieht sich auf einen Heizkessel zur Brennwertnutzung und ein Verfahren zum Betreiben dieses Heizkessels mit den Merkmalen des Oberbegriffs des Patentanspruches 1.

Bei bekannten Kessel-Systemen zur Brennwertnutzung wird das Abgas heruntergekühlt und ein mehr oder weniger großer Anteil des im Abgas enthaltenen Wasserdampfes kondensiert, um den Wirkungsgrad zu steigern. Das Abgas verläßt den Kessel zwar auf niedrigem Temperaturniveau, aber mit Wasserdampf gesättigt. Eine geringfügig weitere Auskühlung in der Abgasleitung oder dem Kamin führt zu weiterer Ausfällung von Kondensat (Schwitzwasser) und damit zu unerwünschten Korrosionen der Abgasleitung oder Versottungen des Kamines. Zwar werden die Abgasleitungen hinter Brennwertkesseln aus Edelstählen (z.B. 1.4571) hergestellt und die Kamine werden mit Edelstahlrohren im Baukastensystem nachgerüstet, doch kommt es bei den verwendeten Stählen immer wieder zu Korrosionen, zumindest aber zu flächenartigem Abtrag und Schwermetallauswaschungen. Dabei sind die Korrosionsvorgänge bei Verfeuerung von Erdgas wegen des schwach sauren Kondensates weniger gravierend, werden aber sehr problematisch bei Verfeuerung von Heizöl EL mit wesentlich saurerem und aggressiveren Kondensat wegen der Anwesenheit von schwefeliger Säure bzw. Schwefelsäure in unterschiedlich schwacher Konzentration. Die für den Erdgaseinsatz bekannten Edelstähle halten dem Kondensat aus Ölfeuerung nicht stand und höher legierte Stähle führen zu unwirtschaftlichen Produkten.

In der EP-A-0 368 599 ist ein Kessel mit einem mit Rauchgas beheizten Speisewasservormärmer beschrieben, der mehrere Kondensationswärmetauscher enthält, denen ein Tropfenabscheider und ein Wärmetauscher zur Wiederaufheizung des Rauchgases nachgeschaltet sind. Dieser Wärmetauscher wird durch einen Teilstrom des zuvor vorgewärmten Speisewassers beheizt. Der Teilstrom wird nach dem Verlassen des Wärmetauschers dem vorgewärmten Speisewasser wieder beigemischt.

Aus der US-A-5 036 903 ist ein Rauchgaskondensationswärmetaucher bekannt, dessen Rohre aus einem Kohlenstoffwerkstoff bestehen.

Der Erfindung liegt deshalb die Aufgabe, zugrunde ein System zur Brennwertnutzung zu entwickeln, das für beide Brennstoffe (Heizöl EL, Erdgase) geeignet und bei dem sowohl eine Wiederaufheizung des Rauchgases ohne Taupunktprobleme an dem Abgaswärmetauscher als auch eine Anhebung der Rücklauftemperatur möglich ist.

Diese Aufgabe wird bei gattungsgemäßen Heizkessel erfindungsgemäß durch die kennzeichnenden Merkmale des Patentanspruches 1 gelöst. Ein Verfahren zum Betreiben eines solchen Heizkessels ist Gegenstand des Patentanspruches 8. Vorteilhafte Ausgestaltungen der Erfindung sind in den Unteransprüchen angegeben.

Durch den Einsatz des Kohlenstoffwerkstoffes Diabon für den eigentlichen Abgaskondensationswärmetauscher wird die Korrosionsproblematik auch im Hinblick auf das stark saure Kondensat von Heizöl EL beherrscht. Der Werkstoff hat sich unter wesentlich aggressiveren Medien in der chemischen Industrie bewährt.

Im Hinblick auf die Abgasseite wird ein neuer Weg beschritten. Das mit Wasserdampf leicht untersättigte Abgas wird zunächst einer Kammer zugeführt, in der das Kondensat abgeleitet werden kann und dann durch einen Demister geführt, um eventuell im Abgas noch vorhandene Tröpfchen abzuscheiden. Das leicht untersättigte Abgas mit einer Temperatur um 40-45 °C gelangt zu dem Abgaswärmetauscher, in dem es um ca. 15 °C aufgeheizt und damit "getrocknet" wird. Der Temperaturabfall in normal isolierten Kaminen beträgt ca. 0,5 °C pro m bei einem Abgastemperaturniveau von ca. 200 °C. Bei dem vorliegenden niedrigen Niveau des aufgeheizten Abgases bei ca. 60 °C liegt der Temperaturabfall entsprechend niedriger. Es wird damit sichergestellt, daß eine Taupunktunterschreitung in den Abgaswegen nicht stattfindet. Die Heizkessel-Wärmetauscher-Kombination kann an jeden normalen Kamin angeschlossen werden. Die Kaminnachrüstung mit teuren Edelstahl-Rohr-Systemen entfällt. Zudem kann der Brennstoff Heizöl EL eingesetzt werden, für dessen Kondensat es bislang keine geeigneten Abgassysteme in größeren Nennweiten gibt, da Kondensation in den Abgaswegen grundsätzlich vermieden wird.

Da der Teilstorm des Kesselvorlaufes nach dem Verlassen des Abgaswärmetauschers in den Kesselrücklauf eingespeist wird, werden in einer Funktion sowohl die Wiederaufheizung des Rauchgases ohne Taupunktprobleme an dem Abgaswärmetauscher als auch die Rücklauftemperaturanhebung des Kessels bewirkt. Die Wassermassenströme sind so bemessen, daß ein hohes Temperaturniveau an dem Abgaswärmetauscher ansteht und eine ausreichende Rücklauftemperaturanhebung auf größer 50 °C erreicht wird.

Mehrere Ausführungsbeispiele der Erfindung sind in der Zeichnung dargestellt und werden. im folgenden näher erläutert. Es zeigen:
Figuren 1, 2 und 4 jeweils einen schematischen Längsschnitt durch einen Heizkessel und
Figur 3 den vorderen Teil des Abgaskondensationswärmetauschers

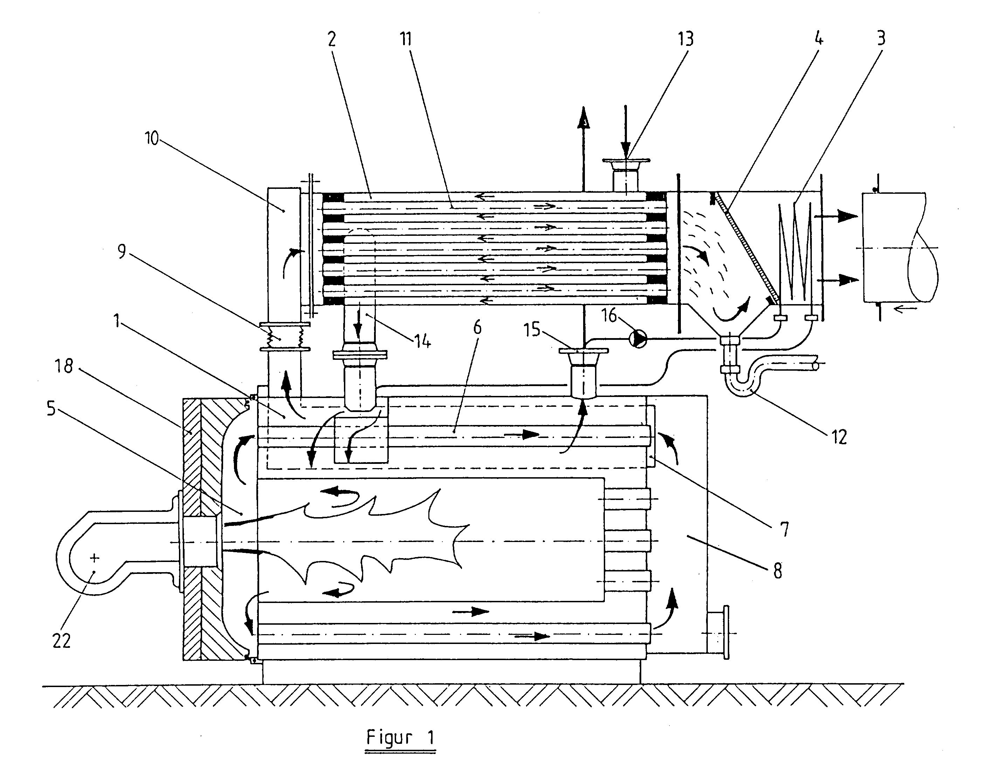

Das in Fig. 1 schematisch dargestellte Beispiel zeigt einen Kessel (1) nach dem Umkehrbrennkammerprinzip mit einem aufgesetzten Abgaskondensationswärmetauscher (2) dessen Rohre (11) aus einem Kohlenstoffwerkstoff mit der Bezeichnung Diabon bestehen, mit einem Abgaswärmeaustauscher (3) zur Wiederaufheizung der Rauchgase und mit einem Demister (4).

Das Rauchgas kehrt in der Brennkammer (5) um, tritt in Rauchrohre (6) ein und erreicht den Abgassammelkasten (7) mit einer Temperatur von ca. 165 °C. Von dort wird es in einem Rückführrohr (8) außerhalb des Kesselwasserraumes nach vorne geführt. Über einen Kompensator (9) und Aufsatz-Umlenkkasten (10) wird das Rauchgas zum Eintritt des Abgaskondensationswärmetauschers (2) geleitet und durchströmt die aus Diabon bestehenden Rohre (11). Am Austritt des Abgaskondensationswärmetauscher schließt sich ein Gehäuse mit Siphon (12) zur Kondensatableitung, Demister (4) zur Tröpfchenabscheidung und Abgaswärmetauscher (3) zur Wiederaufheizung der Rauchgase an.

Wasserseitig tritt der Rücklauf (13) in den Abgaskondensationswärmetauscher (2) ein und das Wasser wird im Gegenstrom zum Rauchgas zur Vorderseite vom Abgaskondensationswärmetauscher (2) geführt und tritt dort in den Kessel über einen Stutzen (14) ein. Bevorzugt tritt das Wasser mit 30-35 °C in den Abgaskondensationswärmetauscher (2) ein und verläßt ihn mit 37-42 °C. Diese Temperatur ist für den Kessel zu niedrig (Taupunktunterschreitung im Kessel), auch wenn das Wasser bevorzugt auf die heißen Heizflächen geleitet wird mit den höchsten Wandübertemperaturen im Kessel.

Dem Kesselvorlauf (15), der konstant mit 80 - 90 °c gefahren wird, wird deshalb ein Teilstrom Wasser entnommen und mittels Umwälzpumpe (16) zunächst zu Abgaswärmetauscher geführt. In diesem kühlt das Wasser um nur 1 °C ab, so daß sich Abgaswärmetauscher (3) immer oberhalb des Taupunktes befindet und aus unlegiertem Werkstoff gefertigt werden kann, was eine kostengünstige Lösung darstellt. Nach Verlassen des Abgaswärmetauschers (3) wird der immer noch auf hohem Temperaturniveau befindliche Teilstrom in den Kesselrücklauf (14) eingespeist, um eine Temperaturanhebung des Rücklaufes vor Eintritt in den Kessel zu bewirken.

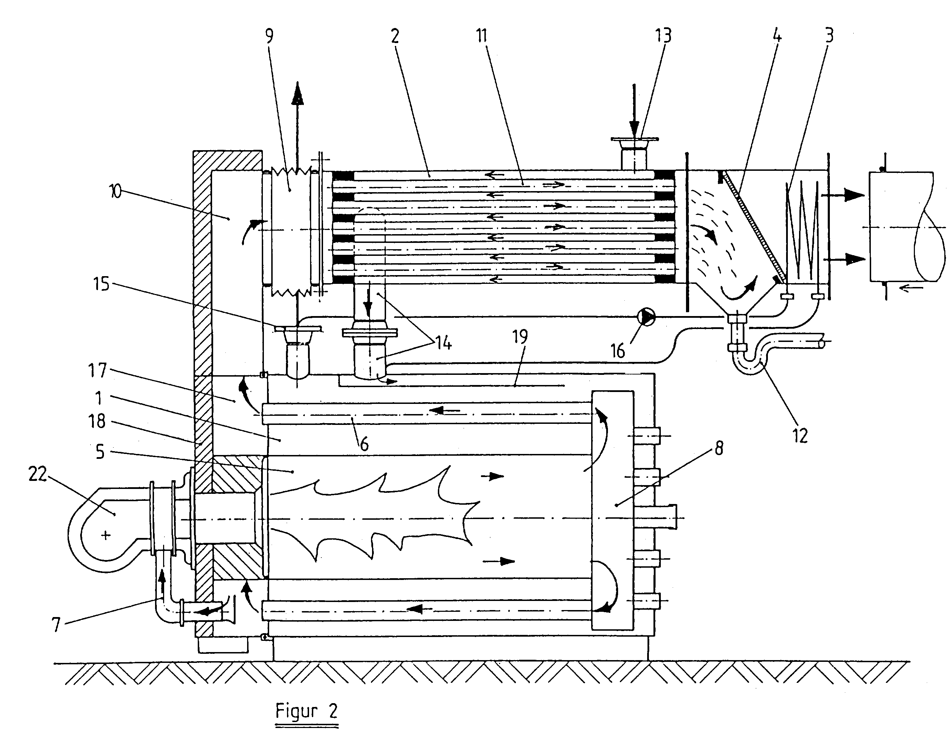

Die Figur 2 zeigt die Anwendung des zuvor beschriebenen Prinzips auf einen Kessel mit hinterer Umlenkung der Rauchgase. Die Rauchgase verlassen die Brennkammer (5) hinten und treten nach Passieren einer innenliegenden Wendekammer (8) in die Rauchrohre (6) ein. Am Rohraustritt gelangen die Rauchgase in eine Ringkammer (17) der Kesseltür (18) und von dort über Aufsatzumlenkkasten (10) und Kompensator (9) zum Eintritt in den Abgaskondensationswärmetauscher (2) und durchströmen die Diabon-Rohre (11). Dem Abgaskondensationswärmetauscher (2) folgt ein Gehäuse mit Siphon (12) zur Kondensatableitung, Demister (4) zur Tröpfchenabscheidung und Abgaswärmetauscher (3) zur Wiederaufheizung der Rauchgase. Die wasserseitige Durchströmung des Abgaskondensationswärmetauschers (2), des Abgaswärmetauscher (3) und des Kessels folgt dem gleichen Prinzip wie zu Figur 1 beschrieben. Jedoch wird nach Eintritt des Wassers in den Kessel durch den Stutzen (14) das Wasser im Kessel über eine Leitwanne (19) nach hinten geführt, um eine Hinführung zu den heißen Heizflächen des Kessels zu gewährleisten. Die Durchströmung des Abgaswärmetauscher in Kombination mit der Rücklauftemperaturanhebung am Kessel erfolgt, wie bereits zu Figur 1 beschrieben. Vorteilhaft wird die Kombination Kessel / Kondensationswärmeaustauscher ergänzt durch einen günstigen Anschluß für die Entnahme von Rauchgas zum Brenner (22) zur Inertisierung der Flamme und Reduzierung der NOₓ-Gehalte. Da sich das Rauchgas in der Ringkammer (17) Kesseltür (18) der auf Abgastemperaturniveau 165 °C befindet, kann hier das Rauchgas auf kürzestem Weg zum Brenneransaugstutzen geführt werden und muß nicht, wie bei externer Rauchgasrezirkulation üblich, vom Kesselende mittels Gebläse nach vorne gefördert werden.

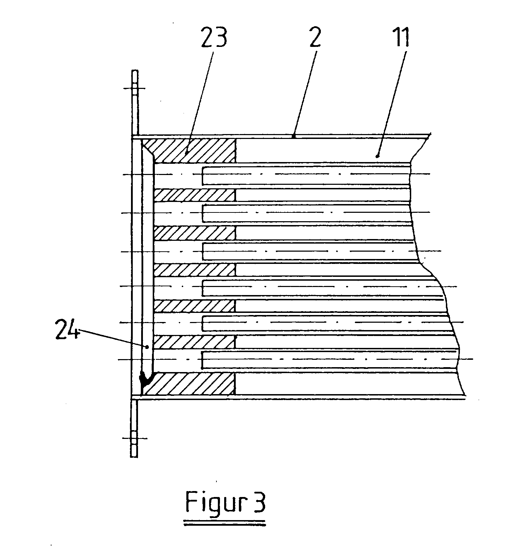

Die Figur 3 zeigt ein Detail am Rohreintritt des Abgaskondensationswärmetauschers (2). In die Rohrplatte (23) ist eine Aussparung (24) eingefräst, die bei Kondensataustritt vorne und Kondensatbildung am Boden dieses sammelt und über das unterste Rohr nach hinten ableitet. Der Abgaskondensationswärmetauscher (2) nach Figur 1 und Figur 2 hat eine Neigung von 1 - 2 ° nach hinten, um die Abflußrichtung des Kondensates nach hinten zum Siphon (12) vorzugeben.

## Patentansprüche

1. Heizkessel (1) in Kombination mit einem rauchgasseitig nachgeschalteten Abgaskondensationswärmeaustauscher (2) mit Kondensation des im Rauchgas enthaltenen Wasserdampfes zur Brennwertnutzung und einem zweiten, in Reihe geschalteten Abgaswärmetauscher (3) zur Wiederaufheizung der Abgase, wobei der Abgaswärmetauscher (3) über eine mit einer Umwälzpumpe (16) versehene und von einem Teilstrom des Kesselvorlaufes durchströmte Leitung mit dem Kesselvorlaufstutzen (15) verbunden ist, dadurch gekennzeichnet, daß der Teilstrom nach dem Verlassen des Abgaswärmetauschers (3) in den Kesselrücklauf (14) eingespeist wird und daß die Rohre (11) des Abgaskondensationswärmeaustauschers (2) aus einem Kohlenstoffwerkstoff bestehen.

2. Kessel nach Anspruch 1, dadurch gekennzeichnet, daß in dem Rauchgasstrom zwischen dem Abgaskondensationswärmeaustauscher (2) und dem Abgaswärmetauscher (3) ein Demister (4) angeordnet ist und daß unterhalb des Demisters (4) ein Siphon (12) angeordnet ist.

3. Kessel nach Anspruch 2, dadurch gekennzeichnet, daß Kondensatableitung, Siphon (12), Demister (4) und Abgaswärmetauscher (3) eine Geräteeinheit bilden.

4. Kessel nach Anspruch 1, dadurch gekennzeichnet, daß die Kesseltür (18) so ausgebildet ist, daß sie mit Hilfe eines Aufsatzumlenkkastens (10) die 180°-Umlenkung vom Kessel zum Abgaskondensationswärmeaustauscher (2) übernimmt und daß die Tür einen Abgang für kaltes Rezirkulationsrauchgas zum Brenner (22) enthält.

5. Kessel nach Anspruch 1, dadurch gekennzeichnet, daß die Rohre des Abgaskondensationswärmeaustauschers (2) in Durchströmrichtung unter einem Winkel mit 1 bis 2° nach unten geneigt sind.

6. Kessel nach Anspruch 1, dadurch gekennzeichnet, daß in dem in Strömungsrichtung des Rauchgases vorderen Rohrboden (23) des Abgaskondensationswärmeaustauschers (2) eine Aussparung (24) oder eine Abflußrinne angeordnet ist, die mit dem untersten Rohr des Abgaskondensationswärmeaustauschers (2) in Verbindung steht und die das am Rohrboden anfallende Kondensat sammelt und über das Rohr in Strömungsrichtung abführt. (Figur 3)

7. Verfahren zum Betreiben eines Heizkessels nach den Ansprüchen 1 bis 6, dadurch gekennzeichnet, daß in dem Abgaswärmeaustauscher die Abgase, die nur noch einen kleinen Teil des ursprünglichen Wasserdampfes enthalten, wieder aufgeheizt werden und daß zur Wiederaufheizung ein Teilstrom des konstant heißen Kesselvorlaufes als Heizmedium benutzt wird und dieser Teilstrom nach dem Verlassen des Abgaswärmetauschers mittels einer Umwälzpumpe zugleich zur Rücklauftemperaturanhebung des Kessels genutzt wird, indem der Teilstrom in den Kesselrücklauf eingespeist wird.

8. Verfahren nach Anspruch 7, dadurch gekennzeichnet, daß hinter dem Abgaskondensationswärmeaustauscher eine Abführung des Kondensates über einen Siphon und eine Tröpfchenabscheidung über Prallplatte oder Demister stattfinden, bevor das so getrocknete Rauchgas dem Abgaswärmetauscher zugeführt wird.

9. Verfahren nach Anspruch 7, dadurch gekennzeichnet, daß der Abgaswärmetauscher immer von Heizmedium mit Temperaturen oberhalb des Taupunktes durchströmt wird, um Taupunktunterschreitungen am Abgaswärmetauscher auszuschließen.

10. Verfahren nach Anspruch 7, dadurch gekennzeichnet, daß das Kesselwasser bei Eintritt in den Kessel über einen injektionsartig ausgebildeten Stutzen geführt wird, der in den Kesselkörper hineinragt.

11. Verfahren nach Anspruch 7, dadurch gekennzeichnet, daß das Rücklaufwasser im Kessel über eine Leitwanne zu den heißen Kesselheizflächen geführt wird.

## Claims

1. Boiler (1) in combination with a waste gas condensation heat exchanger (2) connected downstream at the flue gas side and with condensation of the steam, which is contained in the flue gas, for caloric value exploitation and a second, serially connected waste gas heat exchanger (3) for reheating of the waste gases, wherein the waste gas heat exchanger (3) is connected with the boiler feed connection (15) by way of a line provided with a circulating pump (16) and flowed through by a partial flow of the vessel feed, characterised in that the partial flow is fed into the boiler return (14) after leaving the waste gas heat exchanger (3) and that the tubes (11) of the waste gas condensation heat exchanger (2) consist of a carbon material.

2. Boiler according to claim 1, characterised in that a demister (4) is arranged in the flue gas flow between the waste gas condensation heat exchanger (2) and the waste gas heat exchanger (3) and that a siphon (12) is arranged below the demister (4).

3. Boiler according to claim 2, characterised in that the condensate drain, siphon (12), demister (4) and waste gas heat exchanger (3) form an apparatus unit.

4. Boiler according to claim 1, characterised in that the boiler door (18) is so constructed that with the assistance of an attached deflecting box (10) it undertakes the 180° deflection from the boiler to the waste gas condensation heat exchanger (2) and that the door contains an escape for cold recirculation flue gas to the burner.

5. Boiler according to claim 1, characterised in that the tubes of the waste gas condensation heat exchanger (2) are inclined downwardly in throughflow direction at an angle of 1 to 2°.

6. Boiler according to claim 1, characterised in that arranged in the tube base (23), which is at the front in the flow direction of the flue gas, of the waste gas condensation heat exchanger (2) is a cutout (24) or an outflow channel, which is connected with the lowermost tube of the waste gas condensation heat exchanger (2) and which collects the condensate precipitating at the tube base and conducts it away in flow direction by way of the tube (Figure 3).

7. Method of operating a boiler according to claims 1 to 6, characterised in that the waste gases, which still contain only a small part of the original steam, are reheated in the waste gas heat exchanger and that for the reheating a partial flow of the constantly hot boiler feed is used as heating medium and this partial flow after leaving the waste gas heat exchanger by means of a circulating pump is at the same time used for raising the return temperature of the boiler, in that the partial flow is fed into the boiler return.

8. Method according to claim 7, characterised in that a discharge of the condensate by way of a siphon and a droplet precipitation by way of a baffle plate or demister take place behind the waste gas condensation heat exchanger before the thus-dried flue gas is fed to the waste gas heat exchanger.

9. Method according to claim 7, characterised in that the waste gas heat exchanger is always flowed through by hot medium at temperatures above the condensation point in order to exclude any falling below of the condensation point at the waste gas heat exchanger.

10. Method according to claim 7, characterised in that the boiler feed water on entry into the boiler is led by way of a stub pipe which is formed in the manner of an injector and which protrudes into the boiler body.

11. Method according to claim 7, characterised in that the return water is led into the vessel by way of a guide shell to the hot boiler surfaces.

## Revendications

1. L'invention concerne une chaudière à condensation (1) combinée à un échangeur de chaleur à condensation des gaz brûlés (2) monté en aval côté gaz de fumée, à condensation de la vapeur d'eau contenue dans les gaz de fumée, afin d'exploiter la chaleur utile, ainsi qu'à un second échangeur de chaleur de gaz brûlés (3), monté en série et servant à réchauffer les gaz brûlés. Ledit échangeur de chaleur de gaz brûlés (3) est relié à la tubulure montante de la chaudière (15) par l'intermédiaire d'une conduite pourvue d'une pompe de circulation (16) et traversée par un courant partiel du courant d'alimentation de la chaudière. Cette chaudière à condensation se caractérise en ce qu'après avoir quitté l'échangeur de chaleur de gaz brûlés (3), le courant partiel est introduit dans le courant de retour (14) de la chaudière et en ce que les tubes (11) de l'échangeur de chaleur à condensation des gaz brûlés (2) sont réalisés dans une, matière carbonée.

2. La chaudière selon la revendication 1 se caractérise en ce qu'il est prévu un dispositif antibuée (4) placé dans le flux de gaz de fumée, entre l'échangeur de chaleur à condensation des gaz brûlés (2) et l'échangeur de chaleur de gaz brûlés (3) et en ce qu'il est également prévu un siphon (12) en dessous du dispositif antibuée (4).

3. La chaudière selon la revendication 2 se caractérise en ce que la conduite d'évacuation du produit de condensation, le siphon (12), le dispositif antibuée (4) et l'échangeur de chaleur de gaz brûlés (3) forment une unité.

4. La chaudière selon la revendication 1 se caractérise en ce que la porte (18) de ladite chaudière se présente de manière à assurer à l'aide d'un caisson d'inversion rapporté (10), le passage à 180° entre la chaudière et l'échangeur de chaleur à condensation des gaz brûlés (2) et en ce que ladite porte comprend une sortie pour faire passer les gaz de fumée de re-circulation froids jusqu'au brûleur (2).

5. La chaudière selon la revendication 1 se caractérise en ce que les tubes de l'échangeur de chaleur à condensation des gaz brûlés (2) sont inclinés vers le bas à un angle de 1 à 2 ° dans le sens d'écoulement.

6. La chaudière selon la revendication 1 se caractérise en ce qu'il est prévu un évidement ou un conduit de décharge dans le fond tubulaire avant (23) de l'échangeur de chaleur à condensation des gaz brûlés (2), dans le sens d'écoulement des gaz de fumée. Cet évidement ou conduit de décharge communique avec le tube situé le plus bas de l'échangeur de chaleur à condensation des gaz brûlés (2) et recueille le produit de condensation qui arrive sur le fond tubulaire. Cet évidement ou conduit de décharge évacue le produit de condensation dans le sens d'écoulement, par l'intermédiaire du tube (figure 3).

7. L'invention concerne un procédé permettant de faire fonctionner une chaudière à condensation selon les revendications 1 à 6, qui se caractérise en ce que dans l'échangeur de chaleur à condensation des gaz brûlés (2), les gaz brûlés qui ne contiennent plus qu'une part réduite de la vapeur d'eau initiale, sont à nouveau chauffés et en ce qu'un courant partiel du courant d'alimentation à chaleur constante de la chaudière sert de substance de chauffage et qu'après avoir quitté l'échangeur de chaleur de gaz brûlés, ce courant partiel s'utilise simultanément avec une pompe à circulation pour augmenter la température du courant de retour de la chaudière, du fait que ledit courant partiel est introduit dans le courant de retour de la chaudière.

8. Le procédé selon la revendication 7 se caractérise en ce qu'une évacuation du produit de condensation intervient derrière l'échangeur de chaleur à condensation des gaz brûlés, par l'intermédiaire d'un siphon et en ce qu'une dévésiculation est effectuée par le biais d'une tôle de chicane ou d'un dispositif antibuée, avant que les gaz de fumée ainsi séchés ne soient acheminés jusqu'à l'échangeur de chaleur de gaz brûlés.

9. L'invention concerne un procédé selon la revendication 7, qui se caractérise en ce que l'échangeur de chaleur de gaz brûlés est constamment parcouru par le milieu de chauffage à des températures supérieures au point de rosée, afin d'exclure tout risque de passage en dessous dudit point de rosée au niveau de l'échangeur de chaleur de gaz brûlés.

10. Le procédé selon la revendication 7 se caractérise en ce qu'après son entrée dans la chaudière, l'eau de ladite chaudière est guidée à travers une tubulure de type injecteur qui fait saillie dans le corps de la chaudière.

11. Le procédé selon la revendication 7 se caractérise en ce que l'eau du courant de retour se trouvant dans la chaudière est guidée par l'intermédiaire d'une cuve de guidage jusqu'aux surfaces chauffantes très chaudes de la chaudière.
